(19) Europäisches Patentamt
European Patent Office
Office européen des brevets

(11) EP 3 472 236 B1

(12) **EUROPEAN PATENT SPECIFICATION**

(45) Date of publication and mention of the grant of the patent:
**06.09.2023 Bulletin 2023/36**

(21) Application number: **17740101.5**

(22) Date of filing: **16.06.2017**

(51) International Patent Classification (IPC):
***C08K 5/00*** *(2006.01)* ***C08K 5/42*** *(2006.01)*

(52) Cooperative Patent Classification (CPC):
(C-Sets available)
**C08K 5/42; C08K 5/005** (Cont.)

(86) International application number:
**PCT/IB2017/053597**

(87) International publication number:
**WO 2017/216769 (21.12.2017 Gazette 2017/51)**

(54) **METHOD FOR FORMING POLYCARBONATE MOLDED ARTICLES**

VERFAHREN ZUM HERSTELLEN VON POLYCARBONAT-FORMARTIKELN

MÉTHODE DE FORMATION D’ARTICLES MOULÉS EN POLYCARBONATE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **17.06.2016 US 201662351461 P**

(43) Date of publication of application:
**24.04.2019 Bulletin 2019/17**

(73) Proprietor: **SABIC Global Technologies B.V.**
**4612 PX Bergen op Zoom (NL)**

(72) Inventors:
- **EGGENHUISEN, Tamara Marijke**
  **4811 HB Breda (NL)**
- **ASSINK, Roland Sebastian**
  **4333 EE Middelburg (NL)**
- **VAN DE GRAMPEL, Robert Dirk**
  **4691 DK Tholen (NL)**

(74) Representative: **Algemeen Octrooi- en Merkenbureau B.V.**
**P.O. Box 645**
**5600 AP Eindhoven (NL)**

(56) References cited:
**EP-A1- 2 371 877**
**EP-A1- 2 730 618**
**EP-A1- 3 380 563**
**WO-A1-01/77227**
**WO-A1-2017/103764**
**JP-A- H1 025 408**
**JP-A- H04 328 124**
**JP-A- H04 328 156**
**JP-A- H04 356 559**
**US-A- 5 276 109**
**US-A1- 2005 009 968**
**US-A1- 2007 100 038**
**US-A1- 2009 088 504**
**US-A1- 2014 194 561**
**US-A1- 2014 275 382**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C08K 5/005, C08L 69/00;**
**C08K 5/42, C08L 69/00**

## Description

### FIELD OF THE DISCLOSURE

The present disclosure relates to a method for the manufacture of an article comprising injection molding thermoplastic compositions, and in particular thermoplastic compositions including color stable components that retain desirable physical properties after processing under high heat conditions.

### BACKGROUND OF THE DISCLOSURE

Polycarbonates (PC) are used in a wide variety of applications because of their good balance of properties, including moldability, impact and transparency. For some applications, particularly outdoor applications, additives may be introduced to the polycarbonate prevent or slow its degradation. Common additives include ultraviolet (UV) stabilizers to improve weatherability of polycarbonate under exposure to light containing UV radiation, heat stabilizers to improve the ability of the polycarbonate to withstand excessive thermal conditions, and acid stabilizers to reduce decomposition. Some additives are used to protect the polycarbonate during processing.

Typical molding conditions for molded polycarbonate articles such as those used in automotive lighting lens (e.g., headlamp) and other applications utilize maximum temperatures of from about 280 - 310 degrees Celsius (°C). Polycarbonate resin, which is a desirable material for such applications because of its high transparency and good impact properties, can be molded into many useful articles at these temperatures. Increasing demands for more highly shaped and lighter weight articles (i.e., articles having a reduced wall thickness), however, result in a need to increase the temperature of the polycarbonate resin during molding so that it has sufficient flow (low enough viscosity) to fill the entire mold. In addition, it may be desirable to increase the amount of time that the polycarbonate resin is held at these elevated temperatures to ensure that the polycarbonate is set in the mold. This may be particularly desirable in multicomponent (e.g., 2-component or 2K) molding applications. These applications may thus require increased molding temperatures from standard temperatures of about 280 °C -310 °C to about 330 °C - 360 °C, and increased residence times at these temperatures, which are well above the decomposition temperature of polycarbonate. If the polycarbonate or its respective components degrade under these molding conditions, the article can yellow and its mechanical performance, chemical resistance and weatherability could degrade.

These and other shortcomings are addressed by aspects of the present disclosure.

WO 2017/103764 discloses a method for forming a molded article, comprising combining a polycarbonate resin produced by an interfacial polymerization process and having an endcap level of at least about 98%, a UV absorbing component, a heat stabilizer component and an acid stabilizer component to form a mixture; and forming a molded article from the mixture by molding the mixture under abusive molding conditions, wherein the molded article comprises a ratio of bound UV absorbing component to free UV absorbing component ofless than about 1.0.

US 2009/088505 discloses a polymer blend comprising a first polycarbonate comprising a first structural unit derived from a 2-aryl-3,3-bis( 4-hydroxyaryl)phthalimidine and a second structural unit derived from a dihydroxy aromatic compound, and the second structural unit is not identical to the first structural unit, and a second polycarbonate comprising a structural unit derived from a dihydroxy aromatic compound; wherein the polymer blend has a glass transition temperature of 155 to 200° C, and wherein a test article having a thickness of 3.2 mm and molded from the blend has a haze of less than or equal to 2.6% measured in accordance with ASTM D1003-00.

WO 2017/203493 corresponding to EP 3380563 discloses a thermoplastic composition comprising a copolycarbonate comprising bisphenol A carbonate units and second carbonate units of the formula

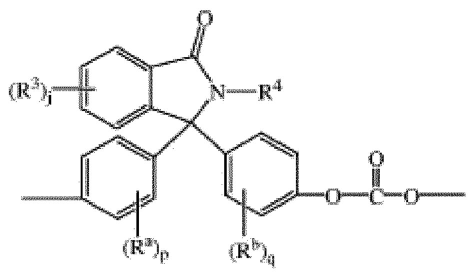

wherein $R^a$ and $R^b$ are each independently a $C_{1-12}$ alkyl, $C_{1-12}$ alkenyl, $C_{3-8}$ cycloalkyl, or $C_{1-12}$ alkoxy, each $R^3$ is independently a $C_{1-6}$ alkyl, $R^4$ is hydrogen, $C_{2-6}$ alkyl or phenyl optionally substituted with 1 to 5 $C_{1-6}$ alkyl groups, p, q, and j are each independently 0 to 4, optionally a bisphenol A homopolycarbonate; and 2 to 40 ppm of an organosulfonic stabilizer of the formula

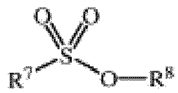

wherein each $R^7$ is independently a $C_{1-30}$ alkyl, $C_{6-30}$ aryl, $C_{7-30}$ alkylarylene, $C_{1-30}$ arylalkylene, or a polymer unit derived from a $C_{2-32}$ ethylenically unsaturated aromatic sulfonic acid or its ester, and $R^8$ is hydrogen; or $R^8$ is $C_{1-30}$ alkyl; or $R^8$ is a group of the formula-$S(=O)_2$-$R^7$, wherein the second carbonate units are present in an amount of 20 to 49 mol% based on the sum of the moles of the copolycarbonate and the bisphenol A homopolycarbonate; and wherein the thermoplastic composition has a Vicat B 120 of 160°C or higher measured according to ISO 306 and a yellowness index of less than 12 measured according to ASTM D1925 on a plaque of 2.5 mm thickness molded at a temperature of 355°C for a residence time of 10 minutes.

JPH 04-328156 discloses a polycarbonate composition obtained by blending (A) a polycarbonate prepared by melt polycondensing an aromatic dihydroxy compound with a carbonic acid diester in the presence of a catalyst containing an alkali (earth) metallic compound in an amount of $10^{-8}$ to $10^{-3}$ mol based on 1 mol aromatic dihydroxy compound with (B) 0.1 - 10ppm, preferably 0.1-5 ppm sulfur-containing acidic compound having a pKa value, (C) 10-1000 ppm phosphorus compound and (D) 1-2000 ppm epoxy compound.

JPH 04-356449 discloses a composition which is resistant to discoloration during molding and gives a molded article excellent in transparency. The composition comprises 100 parts by weight of polycarbonate resin having an intrinsic viscosity (in methylene chloride at 20 °C) of 0.30-0.65dl/g and 0.00001-0.2 parts by weight of a boron compound, or 100 parts by weight of polycarbonate resin and 0.00001-0.0005 parts by weight of sulfonic acid compound having a pKa value of at least 3 and/or derivates thereof.

US 5,276,109 discloses an optical polycarbonate composition comprising (A) a polycarbonate resin having an intrinsic viscosity of about 0.30-0.65 dL/g as measured in 20°C methylene chloride; and (B) a boron compound comprising about 0.00001-0.2 parts by weight per 100 parts by weight of said polycarbonate resin.

JPH 04-328124 discloses a composition produced by carrying out the melt-polycondensation of an aromatic dihydroxy compound such as bisphenol A and a carbonic acid diester in the presence of a catalyst containing $10^{-8}$ to $10^{-3}$ mol (based on 1mol of the aromatic dihydroxy compound) of an alkali metal compound and/or an alkaline-earth metal compound and, while the produced polycarbonate (A) is still in molten state, adding (B) a sulfur-containing acidic compound of formula

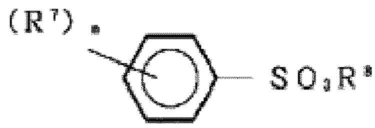

($R^7$ is 1-50C hydrocarbon group; $R^8$ is H or 1-50C hydrocarbon group; n is 0-3) having a pKa of <=3 and/or a derivative derived from the acidic compound and (C) a phosphorus compound such as aromatic phosphite to the polycarbonate (A).

## BRIEF DESCRIPTION OF THE FIGURES

In the drawings, which are not necessarily drawn to scale, like numerals may describe similar components in different views. Like numerals having different letter suffixes may represent different instances of similar components. The drawings illustrate generally, by way of example, but not by way of limitation, various aspects discussed in the present document.

FIG. 1 shows the results of a Design of Experiments analysis at 0 wt. % UV absorbing component.
FIG. 2 shows the results of a Design of Experiments analysis at 0.3 wt. % UV absorbing component.

## SUMMARY

Polymer processing methods may require that the melt temperature of the molding apparatus be sufficiently high to achieve the desired polymer behavior such as high flow or thin wall moldability. However, where the melt temperature of the molding apparatus exceeds the decomposition temperature of the polymer, degradation of the polymer may occur. Extended residence times may further degrade the polymer. Processing temperatures in excess of 300 °C and prolonged residence times are commonly applied to melt polycarbonate in high flow processes. The higher the temperature and the longer the residence time, the higher the degree of degradation, which may impair a number of physical properties. The level of free hydroxyl groups (-OH) in the polycarbonate after processing directly corresponds

to the extent of degradation as the -OH groups are formed upon chain scission.

The present invention is as defined in claim 1 with preferred aspects thereof being defined in the dependent claims.

## DETAILED DESCRIPTION

The present disclosure can be understood more readily by reference to the following detailed description of the disclosure and the Examples included therein.

Elevated temperatures and increased molding residence times, employed, for example, during two-component (2K) molding, may result in the decomposition of polycarbonate resin and/or other additives. Such decomposition may result in the occurrence of undesirable properties within the molded article, including but not limited to color change (e.g., yellowing), reduction in mechanical properties (e.g., impact strength), loss of chemical resistance, and reduced weatherability. Often, the extent of degradation of the polycarbonate can be measured according to the level of free hydroxyl (-OH) groups present in the polymer following molding. In various aspects, the present disclosure relates to compositions including a polycarbonate resin and one or more of a heat stabilizer and an acid stabilizer. An article formed from the composition, when tested using a 2.5 mm injection molded color plaque, includes a level of free -OH groups that is less than a level of free -OH groups of a reference article injection molded from a substantially similar reference composition consisting essentially of the polycarbonate resin without the heat stabilizer and the acid stabilizer. That is, various aspects the compositions of the present disclosure exploit the synergistic effect of a heat stabilizer and an acid stabilizer on reducing the degradation of polycarbonate resins subjected to elevated processing temperatures for prolonged residence times. Further, the combination of heat stabilizer and acid stabilizer additives may reduce the formation of free -OH groups in a polycarbonate polymer subjected to elevated processing temperatures for prolonged residence times.

As used herein, a "substantially similar reference composition" is a reference composition that includes the same components, and the same amounts of the components, as the claimed (or described) inventive composition, except that the reference composition does not include the recited component (e.g., a heat stabilizer, an acid stabilizer and/or a UV absorbing component). In other words, the reference composition is otherwise identical to the claimed/described composition but for the exclusion of the recited component(s). It will be recognized that where the recited component(s) is/are omitted from the reference composition, the omitted component(s) will be replaced with a corresponding content of the primary component of the composition (e.g. polycarbonate). Thus, as shown in the Examples set forth below, if the described composition includes, e.g., 0.08 wt. % of a heat stabilizer and 3 ppm of an acid stabilizer with the balance being polycarbonate and other additional additives, the content of the omitted components will be replaced with a corresponding amount of polycarbonate (e.g., an additional 0.08 wt. % plus 3 ppm polycarbonate).

Before the present compounds, compositions, articles, systems, devices, and/or methods are disclosed and described, it is to be understood that they are not limited to specific synthetic methods unless otherwise specified, or to particular reagents unless otherwise specified, which can of course vary. It is also to be understood that the terminology used herein is for the purpose of describing particular aspects only and is not intended to be limiting.

Various combinations of elements of this disclosure are encompassed by this disclosure, e.g., combinations of elements from dependent claims that depend upon the same independent claim.

Moreover, it is to be understood that unless otherwise expressly stated, it is in no way intended that any method set forth herein be construed as requiring that its steps be performed in a specific order. Accordingly, where a method claim does not actually recite an order to be followed by its steps or it is not otherwise specifically stated in the claims or descriptions that the steps are to be limited to a specific order, it is no way intended that an order be inferred, in any respect. This holds for any possible non-express basis for interpretation, including: matters of logic with respect to arrangement of steps or operational flow; plain meaning derived from grammatical organization or punctuation; and the number or type of aspects described in the specification.

### Definitions

It is also to be understood that the terminology used herein is for the purpose of describing particular aspects only and is not intended to be limiting. As used in the specification and in the claims, the term "comprising" can include the embodiments "consisting of″ and "consisting essentially of." Unless defined otherwise, all technical and scientific terms used herein have the same meaning as commonly understood by one of ordinary skill in the art to which this disclosure belongs. In this specification and in the claims that follow, reference is made to a number of terms that shall be defined herein.

As used in the specification and the appended claims, the singular forms "a," "an" and "the" include plural referents unless the context clearly dictates otherwise. Thus, for example, reference to "a polycarbonate" includes mixtures of two or more polycarbonate polymers.

As used herein, the term "combination" is inclusive of blends, mixtures, alloys, reaction products, and the like.

As used herein, the terms "about" and "at or about" mean that the amount or value in question can be the designated value, approximately the designated value, or about the same as the designated value. It is generally understood, as used herein, that it is the nominal value indicated $\pm 10\%$ variation unless otherwise indicated or inferred. The term is intended to convey that similar values promote equivalent results or effects recited in the claims. That is, it is understood that amounts, sizes, formulations, parameters, and other quantities and characteristics are not and need not be exact, but can be approximate and/or larger or smaller, as desired, reflecting tolerances, conversion factors, rounding off, measurement error and the like, and other factors known to those of skill in the art. In general, an amount, size, formulation, parameter or other quantity or characteristic is "about" or "approximate" whether or not expressly stated to be such. It is understood that where "about" is used before a quantitative value, the parameter also includes the specific quantitative value itself, unless specifically stated otherwise.

As used herein, the terms "optional" or "optionally" means that the subsequently described event or circumstance can or cannot occur, and that the description includes instances where said event or circumstance occurs and instances where it does not. For example, the phrase "optional additional additive materials" means that the additional additive materials can or cannot be substituted and that the description includes molded articles that both include and do not include additional additive materials.

As used herein, the term "effective amount" refers to an amount that is sufficient to achieve the desired modification of a physical property of the composition or material. For example, an "effective amount" of a heat stabilizer refers to an amount that is sufficient to achieve the desired improvement in the property modulated by the formulation component, e.g. achieving the desired level of UV absorbing component stability and/or color stability. The specific level in terms of wt. % in a composition required as an effective amount will depend upon a variety of factors including the amount and type of polycarbonate, amount and type of other components, and end use of the article made using the composition.

Disclosed are the components to be used to prepare the compositions of the disclosure as well as the compositions themselves to be used within the methods disclosed herein. These and other materials are disclosed herein, and it is understood that when combinations, subsets, interactions, groups, etc. of these materials are disclosed that while specific reference of each various individual and collective combinations and permutation of these compounds cannot be explicitly disclosed, each is specifically contemplated and described herein. For example, if a particular compound is disclosed and discussed and a number of modifications that can be made to a number of molecules including the compounds are discussed, specifically contemplated is each and every combination and permutation of the compound and the modifications that are possible unless specifically indicated to the contrary. Thus, if a class of molecules A, B, and C are disclosed as well as a class of molecules D, E, and F and an example of a combination molecule, A-D is disclosed, then even if each is not individually recited each is individually and collectively contemplated meaning combinations, A-E, A-F, B-D, B-E, B-F, C-D, C-E, and C-F are considered disclosed. Likewise, any subset or combination of these is also disclosed. Thus, for example, the sub-group of A-E, B-F, and C-E would be considered disclosed. This concept applies to all aspects of this application including, but not limited to, steps in methods of making and using the compositions of the disclosure. Thus, if there are a variety of additional steps that can be performed it is understood that each of these additional steps can be performed with any specific aspect or combination of aspects of the methods of the disclosure.

References in the specification and concluding claims to parts by weight of a particular element or component in a composition or article, denotes the weight relationship between the element or component and any other elements or components in the composition or article for which a part by weight is expressed. Thus, in a compound containing 2 parts by weight of component X and 5 parts by weight component Y, X and Y are present at a weight ratio of 2:5, and are present in such ratio regardless of whether additional components are contained in the compound.

A weight percent of a component, unless specifically stated to the contrary, is based on the total weight of the formulation or composition in which the component is included.

The terms "BisA," "BPA," or "bisphenol A," which can be used interchangeably, as used herein refers to a compound having a structure represented by the formula:

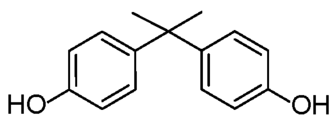

BisA can also be referred to by the name 4,4'-(propane-2,2-diyl)diphenol; p,p'-isopropylidenebisphenol; or 2,2-bis(4-hydroxyphenyl)propane. BisA has the CAS # 80-05-7.

As used herein, "polycarbonate" refers to an oligomer or polymer including residues of one or more dihydroxy compounds, e.g., dihydroxy aromatic compounds, joined by carbonate linkages; it also encompasses homopolycarbonates, copolycarbonates, and (co)polyester carbonates.

The terms "residues" and "structural units", used in reference to the constituents of the polymers, are synonymous throughout the specification.

As used herein the terms "weight percent," "wt%," and "wt. %," which can be used interchangeably, indicate the percent by weight of a given component based on the total weight of the composition, unless otherwise specified. That is, unless otherwise specified, all wt. % values are based on the total weight of the composition. It should be understood that the sum of wt. % values for all components in a disclosed composition or formulation are equal to 100.

Unless otherwise stated to the contrary herein, all test standards are the most recent standard in effect at the time of filing this application.

Each of the materials disclosed herein are either commercially available and/or the methods for the production thereof are known to those of skill in the art.

It is understood that the compositions disclosed herein have certain functions. Disclosed herein are certain structural requirements for performing the disclosed functions and it is understood that there are a variety of structures that can perform the same function that are related to the disclosed structures, and that these structures will typically achieve the same result.

**Method for Forming Abusively Molded Article**

The present disclosure relates to a method for the manufacture of an article comprising injection molding a composition including a polycarbonate resin, a heat stabilizer, an acid stabilizer and an ultraviolet absorbing component subjected to abusive molding conditions. An article formed from the composition, when tested using a 2.5 mm injection molded color plaque, includes a level of free -OH groups that is less than level of free -OH groups of a reference article injection molded from a substantially similar reference composition consisting essentially of the polycarbonate resin without the heat stabilizer and the acid stabilizer. In an aspect, the molded article, when tested using a 2.5 mm color plaque, includes less than 400 ppm by weight of free -OH groups with a maximum molding temperature of at least about 350 °C and at a residence time of at least about 15 minutes. Further aspects relate to the molded articles including less than 200 ppm by weight of free -OH groups with a maximum molding temperate of at least about 350 °C and at a residence time of at least about 6 minutes. It has been found that the level of free -OH groups in an abusively molded article including a polycarbonate resin may be reduced by the presence of a heat stabilizer and an acid stabilizer in the polycarbonate resin. An appropriate heat stabilizer is added to minimize or prevent thermal degradation of the polycarbonate when the resin is subjected to elevated temperatures, particularly those employed during abusive molding. The heat stabilizer is added in addition to an acid stabilizer, which is introduced to prevent variation in the rheological properties of the polymer with time and phase separation that may gradually occur as the polymer ages.

In various aspects of the present disclosure, abusive molding conditions relate to the maximum temperature at which the article is molded and the amount of time the article is held at that maximum temperature. As noted above, while typical molding conditions for molded polycarbonate articles such as those used in automotive lighting (e.g., headlamp) and other applications utilize maximum temperatures of from about 280-310 degrees Celsius (°C), in some applications it is desirable to increase the molding temperatures to at least about 330 °C, up to at least about 360 °C. In addition, it may be desirable to increase the amount of time that the polycarbonate resin is held at these elevated temperatures; while in standard molding applications residence times may be about 6 minutes or less, they may need to be increased to up to about 12 minutes or longer in certain applications. Such abusive molding conditions result in the degradation of the polycarbonate resin. As an example, a polycarbonate at elevated temperatures degradation of the polycarbonate polymer chain (chain scission) may occur thereby forming free -OH groups in the polymer. In a specific example, where a benzotriazole UV absorbing component is a further component in the composition, the UV absorbing component may cause the polycarbonate backbone to scission. As the UV absorbing component attaches to the polycarbonate chain, the level of free UV absorbing component is reduced, which may ultimately result in the molded article having undesirable properties. The extended residence times further increase the degradative effects.

According to the invention, abusive molding conditions include molding the article at a maximum temperature of at least 330 °C at a residence time of at least 10 15 minutes, or at a maximum temperature of at least 340 °C at a residence time of at least 10 minutes, or at a maximum temperature of at least 350 °C at a residence time of at least 6 minutes, or at a maximum temperature of at least about 350 °C at a residence time of at least 15 minutes, or even at a maximum temperature of at least abuul 360 °C at a residence time of at least 3 minutes.

According to the invention, the polycarbonate is a polycarbonate homopolymer including repeating units derived from bisphenol A. In some aspects of the disclosure, the polycarbonate resin has an endcap level of at least about 95%. Polycarbonate resins having this endcap level may generally be produced by an interfacial polymerization process. Purely by way of example, the BPA polycarbonate is produced by amine catalyzed interfacial polycondensation of bisphenol A and phosgene. In contrast to other known methods for forming polycarbonates (such as melt transesterification processes) in which the polycarbonate has an endcap level of less than about 95%, polycarbonates formed by

an interfacial polymerization process are characterized as having an endcap level of at least about 95%. In some aspects, the polycarbonate resin has an endcap level of at least about 98%, or even an endcap level of at least about 99%. In further aspects, the polycarbonate resin is substantially fully endcapped.

The term polycarbonate can be further defined as compositions having repeating structural units of the formula (1):

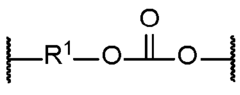 (1),

in which at least 60 percent of the total number of $R^1$ groups are aromatic organic radicals and the balance thereof are aliphatic, alicyclic, or aromatic radicals. In a further aspect, each $R^1$ is an aromatic organic radical and, more preferably, a radical of the formula (2):

$$-A^1-Y^1-A^2- \qquad (2),$$

wherein each of $A^1$ and $A^2$ is a monocyclic divalent aryl radical and $Y^1$ is a bridging radical having one or two atoms that separate $A^1$ from $A^2$. In various aspects, one atom separates $A^1$ from $A^2$. For example, radicals of this type include, but are not limited to, radicals such as -O-, -S-, -S(O) -, -S($O_2$)-, -C(O) -, methylene, cyclohexyl-methylene, 2-[2.2.1]-bicycloheptylidene, ethylidene, isopropylidene, neopentylidene, cyclohexylidene, cyclopentadecylidene, cyclododecylidene, and adamantylidene. The bridging radical $Y^1$ is preferably a hydrocarbon group or a saturated hydrocarbon group such as methylene, cyclohexylidene, or isopropylidene.

In addition to the polycarbonates described above, combinations of the polycarbonate with other thermoplastic polymers, for example combinations of homopolycarbonates and/or polycarbonate copolymers, can be used.

In some aspects of the disclosure, the polycarbonate resin is a high purity polycarbonate resin. High purity polycarbonate resins are generally characterized as having a purity of at least about 99.7% and which contains less than 2 parts per million (ppm) sulfur, although other purity criteria could be applied. In certain aspects the polycarbonate resin included in molded articles of the disclosure is produced from a bisphenol A polymer having a purity of at least about 99.7% and which contains less than 2 ppm sulfur.

The heat stabilizer may stabilize the polycarbonate resin in the molded article formed from the composition by improving color stability upon heat processing. In some aspects the heat stabilizer includes at least one organophosphorous compound, including but not limited to a phosphite, phosphine or phosphonite compound. In particular aspects, the heat stabilizer includes tris-(2,4-di-tert-butylphenyl) phosphite (e.g., IRGAFOS® 168, available from BASF) (IRG), triphenylphosphine (TPP), tridecylphosphite (TDP), tetrakis(2,4-di-tert-butylphenyl)-4,4-diphenyldiphosphonite) (PEPQ), bis (2,4-dicumylphenyl) pentaerythritol diphosphite (e.g., Doverphos S-9228, available from Dover Chemical) (DP), diphenyl monodecyl phosphite (DPDP), or combinations thereof. In specific aspects the heat stabilizer includes IRG.

According to the invention, the heat stabilizer is present in the composition in an amount of from 0.01 wt. % to 0.15 wt. % of the composition

According to the invention, the composition includes an acid stabilizer to minimize or prevent degradation of the polymer that may occur with time and separation of its constituent phases as the polymer ages. The acid stabilizer comprises a sulfonic acid. In certain aspects the acid stabilizer includes p-toluene sulfonic acid.

According to the invention, the acid stabilizer is present in the composition in an amount of from about 0.5 ppm to about 20 ppm by weight of the total weight of the composition, or in certain aspects in an amount of from about 0.5 ppm about 10 ppm, or even in an amount of from about 0.5 ppm to about 5 ppm of the composition. In one aspect acid stabilizer includes about 2 ppm p-toluene sulfonic acid.

According to the invention, an article prepared from the disclosed method, when tested using a 2.5 mm injection molded color plaque, comprises a level of free -OH groups that is less than a level of free -OH groups of a reference article injection molded from a substantially similar reference composition consisting essentially of the polycarbonate resin. In one aspect, the level of free -OH is in comparison to a reference article molded at a maximum temperature of 300 °C and for a residence time of 6 minutes (i.e., standard molding conditions). In a further aspect, the level of free -OH groups is in comparison to a reference article molded at a maximum temperature of 350 °C and for a residence time of at least 15 minutes. As an example, the molded article formed from the composition may include less than 400 ppm by weight of free -OH groups when tested using a 2.5 mm injection molded color plaque. In a yet further example, the molded article formed from the composition may include less than 200 ppm by weight of free -OH groups.

In a further aspect of the present disclosure, a molded article derived from the composition disclosed herein may be transparent. As used herein, transparent, transparency, and their derivatives may refer to a level of transmission for a resin composition that is greater than 89%, including exemplary transmission values of at least 90%, at least 91%,

at least 92%, at least 93%, at least 94%, at least 95%, or any range of transmission values derived from the above exemplified values. In a particular aspect, the molded article has a transmission of from about 89% to about 93%. The transmission may be calculated according to ASTM method D1003-13 (Standard Test Method for Haze and Luminous Transmittance of Transparent Plastics), Procedure A, from data collected on, e.g. a Haze-Guard dual (BYK Gardner) using a standard lamp D65.

By absorbing UV radiation and dissipating the energy via unreactive pathways, a UV absorbing component is used to minimize yellowing and stabilize the polycarbonate. Often, colorants that absorb in the 500 to 700 nanometer (nm) wavelength region are added to compensate for the yellow appearance that is generated by addition of UV absorbing component. According to the invention, the UV absorbing component is a benzotriazole compound. Examples of suitable UV absorbing components include, but are not limited to 2-(2'-Hydroxy-5'-t-octylphenyl) benzotriazole (e.g., CYASORB® UV5411, available from Cytec Industries) (UV5411), 2-(2 hydroxy - 3,5 dicumyl) benzotriazole (e.g., Tinuvin® 234, available from BASF) (UVA 234), phenol, 2,2'-methylenebis(6-(2H-benzotriazol-2-yl)-4-(1,1,3,3-tetramethylbutyl)- (e.g., Tinuvin® 360, available from BASF) (LA31RG/T360), and combinations thereof. In one particular aspect, the UV absorbing component is 2-(2'-Hydroxy-5'-t-octylphenyl) benzotriazole (CYASORB® UV5411).

Any effective amount of UV absorbing component can be included in the molded article. In some aspects the UV absorbing component is present in the molded article in an amount of from about 0.01 to about 10.0 wt. % of the composition, or in certain aspects in an amount of from about 0.01 to about 0.50 wt. % of the composition, or even in an amount of from about 0.05 to about 0.30 wt. % of the composition.

According to aspects of the present disclosure, the molded article formed from the described compositions may be of a particular dimension in order to exhibit the free -OH levels disclosed herein. As an example, the molded article may be of a particular thickness. In one example, the molded article may have a maximum thickness of about 3 mm, or in certain aspects has a thickness of from about 1.5 to about 2.0 mm. In further examples, the molded article may have a maximum length or width dimension of from about 30 centimeters (cm) to about 100 cm.

In further aspects, in addition to the polycarbonate resin, the heat stabilizer, the acid stabilizer, and the ultraviolet absorbing component, the composition may include a colorant. The colorant may be added to impart a particular color to the resultant molded article. The colorant can be any suitable colorant, including a pigment, a dye, and/or a combination thereof. The colorant can be an organic colorant, an inorganic colorant, and/or combinations thereof. The colorant can include titanium dioxide, carbon black, and/or combinations thereof. In some aspects, molded articles formed from the compositions of the present disclosure may have one or more particular colorimetric values. Colorimetric values (dE*, L*, a*, b*) may be calculated according to ASTM E308-15 (Standard Practice for Computing the Colors of Objects by Using the CIE System) using spectral transmission data for D65 illumination and 10° observer. Transmission spectra may be collected on an X rite i7 spectrophotometer. Color difference is calculated according to the CIE 1976 color difference equation:

$$dE^* = \sqrt{dL^{*2} + da^{*2} + db^{*2}}$$

In further aspects, exemplary colorants of the present disclosure may exhibit no appreciable change in the observed transmission spectra of the polycarbonate resin composition after being subjected to abusive molding conditions. Transmission spectra may be measured on, e.g., an X-Rite i7 spectrophotometer for standard and abusive molding conditions using a color plaque, such as a 2.5 mm or 3.0 mm color plaque. Absorbance may then be calculated from the transmission spectra using the Beer-Lambert law:

$$A_\lambda = \log 10\ (I_0/I) = a\lambda \cdot b \cdot c$$

where A is the calculated absorbance, $I_0$ is the incident light intensity, I is the measured light intensity, aλ is a wavelength-dependent absorptivity coefficient, b is the path length, and c is the concentration of the analyte. For a given colorant, the absorption spectrum may have a pronounced maximum value at a specific wavelength related to the molecular structure of the colorant. Should a shift in maximum absorption be observed (shift (Δλ)) or should the absorptivity become less (ΔI), it indicates a change in the molecular structure, which may indicate molecular degradation.

Exemplary colorants may include, but are not limited to, Solvent Violet 13 (SV13) (1-hydroxy-4-(4-methylanilino)anthracene-9,10-dione), Solvent Violet 36 (SV 36), Solvent Blue 97 (S BL 97), Solvent Blue 104 (S BL 104), Pigment Blue 15:1 (P BL 15:1), Pigment Blue 60 (P BL 60), Red violet 26/31 (DV 26/31), and the like, as well as combinations including one or more of the foregoing. Any effective amount of the colorant may be included in the molded article. In some aspects the colorant is present in the molded article in an amount of from about 0.00001 to about 0.01 wt. % of the composition, or in certain aspects in an amount of from about 0.00002 to about 0.0010 wt. % of the

composition, or even in an amount of from about 0.00002 to about 0.0005 wt. % of the composition.

In addition to the foregoing components, the disclosed compositions can optionally include an effective amount of one or more additional additive materials ordinarily incorporated in polycarbonate resin compositions of this type, with the proviso that the additives are selected so as to not significantly adversely affect the desired properties of the polycarbonate resin composition. Combinations of additives can be used. Such additives can be combined with the other components at a suitable time during the mixing of the components prior to or during molding. Exemplary and non-limiting examples of additive materials that can be present in the disclosed molded article include additional reinforcing fillers, acid scavengers, anti-drip agents, antioxidants, antistatic agents, chain extenders, colorants (e.g., pigment and/or dye), de-molding agents, flow promoters, lubricants, mold release agents, plasticizers, quenching agents, flame retardant stabilizers (including for example thermal stabilizers, hydrolytic stabilizers and light stabilizers), UV reflecting additives, or any combination thereof. In particular aspects, the composition includes an antioxidant (e.g., Irganox® 1076, available from BASF), a carboxylic acid ester (e.g., PETS), or a combination thereof.

In one aspect, the composition may include a release agent to facilitate removal of the composition from molded parts in processing. Suitable mold release agents include, for example, metal stearate, stearyl stearate, pentaerythritol tetrastearate, beeswax, montan wax, paraffin wax, or the like, or combinations including at least one of the foregoing mold release agents. Mold releasing agents are generally used in amounts of about 0.1 wt. % to about 1.0 wt. % of the resin composite, but could be used in other amounts. Particular mold release agents may include carboxylic aliphatic acid esters including glycerol tristearate (GTS), glycerol monostearate (GMS), pentaerythritol tetrastearate (PETS), as well as saturated carbohydrate combinations (including poly-alphaolefins).

In certain aspects, each of the additives in the molded article, including but not limited to the heat stabilizer and the acid stabilizer, have maximum impurities of no more than 20 ppm sodium, no more than 10 ppm magnesium, no more than 20 ppm calcium, no more than 0.5 ppm zinc and no more than 0.5 ppm tin. In some aspects each of the additives include no more than 10 ppm sodium, or no more than 2 ppm sodium, or no more than 2 ppm magnesium, or no more than 10 ppm calcium.

Molded articles formed under abusive molding conditions according to aspects described herein may exhibit several improved properties over previously known molded articles. Properties of such molded articles include, but are not limited to, reduced degradation following abusive molding characterized by decreased levels of free -OH groups in the polymer.

Other aspects of the method include selection of a polycarbonate resin, heat stabilizer, acid stabilizer, ultraviolet absorbing component, and optional additional additive components such as those described above. Molded articles formed according to the above methods may have one or more of the physical characteristics described above, including but not limited to those relating to transparency, colorimetric values (e.g., dE* and db*), transmission spectra, difference in absorbance intensity, shift in maximum absorbance, maximum absorbance, and yellowing index.

Molded articles according to aspects of the disclosure described herein may be applicable for use in a wide variety of applications, and in particular articles requiring color stability combined with abusive molding conditions. Further, the molded articles may be formed by a variety of forming methods, including but not limited to injection molding, sheet extrusion and glazing applications. The molded articles disclosed herein may be particularly useful in a variety of applications where transparency, retention of mechanical properties, and thin-wall moldability are desired. For example, the disclosed molded articles may be used in electronic, automotive, imaging, or optical applications. Such applications may include, but are not limited to: automotive lighting lens (e.g., headlamp) applications; anti-fog windows; lenses and/or transparent covers for lighting applications such as automotive lighting, street lighting, outdoor lighting, and high efficiency lighting such as light emitting diode LED applications, organic LED applications, fluorescent lighting applications, vapor gas discharge lighting applications, and neon light applications, which may produce less heat as a byproduct compared to conventional light sources; optical lenses including camera and viewing lenses (e.g., for mobile telephone cameras and for digital still photography cameras), mirrors, telescopic lenses, binoculars, automotive camera lenses, and ophthalmic items such as eyewear including sunglasses, protective goggles, face shields, and prescription lenses. In a still further aspect, non-limiting examples of such devices in the automotive field which may use the disclosed blended thermoplastic compositions in the vehicle's interior include adaptive cruise control, headlight sensors, windshield wiper sensors, and door/window switches.

## EXAMPLES

The following examples are put forth so as to provide those of ordinary skill in the art with a complete disclosure and description of how the compounds, compositions, articles, devices and/or methods claimed herein are made and evaluated, and are intended to be purely exemplary and are not intended to limit the disclosure. Efforts have been made to ensure accuracy with respect to numbers (e.g., amounts, temperature, etc.), but some errors and deviations should be accounted for. Unless indicated otherwise, parts are parts by weight, temperature is in °C or is at ambient temperature, and pressure is at or near atmospheric. Unless indicated otherwise, percentages referring to composition are in terms

of wt. %.

There are numerous variations and combinations of reaction conditions, e.g., component concentrations, desired solvents, solvent mixtures, temperatures, pressures and other reaction ranges and conditions that can be used to optimize the product purity and yield obtained from the described process. Only reasonable and routine experimentation will be required to optimize such process conditions.

The components and additives presented in Table 1 were used to prepare compositions according to aspects of the present disclosure and examples to be used for comparison to molded articles according to aspects of the disclosure.

**Table 1 - Components and additives**

| Component/ Additive | Chemical description | Source or CAS No. |
|---|---|---|
| PC1 | Linear Bisphenol A Polycarbonate, produced via interfacial polymerization, Mw of about 30,000 grams per mole (g/mol) as determined by GPC using polycarbonate standards, phenol end-capped (at least 98%) | SABIC |
| PC2 | Linear Bisphenol A Polycarbonate, produced via interfacial polymerization, Mw of about 21,800 g/mol as determined by GPC using polycarbonate standards, para-cumylphenyl (PCP) end-capped (at least 98%) | SABIC |
| PC3 | Linear Bisphenol A Polycarbonate, produced via interfacial polymerization, Mw of about 30,000 g/mol as determined by GPC using polycarbonate standards, phenol end-capped (at least 98%), produced with BPA of at least 99.7% purity and having less than 2 ppm sulfur | SABIC |
| PC4 | Linear Bisphenol A Polycarbonate, produced via interfacial polymerization, Mw of about 21,800 g/mol as determined by GPC using polycarbonate standards, para-cumylphenyl (PCP) end-capped (at least 98%), produced with BPA of at least 99.7% purity and having less than 2 ppm sulfur | SABIC |
| IRGAFOS 168 (Irg 168) | Tris-(2,4-di-tert-butylphenyl) phosphite | 31570-04-4 |
| Irganox 1076 (Irg 1076) | Octadecyl3(3,5-di-tertbutyl-4-hydroxyphenyl)propionate | 2082-79-3 |
| PETS | Palmitic/Stearic Acid Ester of Dipenta/Pentaerythritol | 115-83-3 |
| UV5411 | 2-(2'-Hydroxy-5'-t-octylphenyl) benzotriazole | 3147-75-9 |
| UVA 234 (Tinuvin® 234) | 2-(2 hydroxy - 3,5 dicumyl) benzotriazole | 70321-86-7 |
| LA31RG/T36 0 (Tinuvin® 360) | Phenol, 2,2'-methylenebis(6-(2H-benzotriazol-2-yl)-4-(1,1,3,3-tetramethylbutyl)- | 103597-45-1 |
| T1577 (Tinuvin® 1577) | Phenol, 2-(4,6-diphenyl-1,3,5-triazin-2-yl)-5-(hexyloxy)- | 147315-50-2 |
| UV3030 (Uvinul® 3030) | 1,3-Bis((2-cyano-3,3-diphenylacryloyl)oxy)-2,2-bis(((2-cyano-3,3-diphenylacryloyl)oxy) methyl)propane | 178671-58-4 |
| BuTos | Butyl p-toluenesulfonate | 778-28-9 |
| $H_3PO_3$ | Phosphorous acid | 10294-56-1 |

Polycarbonate samples were prepared using the components and additives as presented in Table 1. Resultant polycarbonate samples were dried at 120°C for 2-3 hours prior to injection molding. Sample plaques of 2.5-millimeter (mm) thickness were then prepared using an injection molding machine (Engel-1 10t with a 30 mm screw, dedicated to transparent polycarbonate). As a reference for standard molding conditions, the following temperature profile was used: zone 1/zone 2/zone 3/nozzle = 280 °C/ 290 °C/300 °C/ 295 °C. The residence time of the material in the screw was controlled by the cooling time. These processing conditions may be indicated by the following denotation: T(melt)/ residence time = 300 °C per 6 minutes (6'). Similarly, abusive molding may be performed at higher temperatures, but with the same temperature profile as for the referenced standard molding conditions above.

The free -OH level of samples was determined by derivatization and analysis using $^{31}P$ NMR.

Examples 1 through 7 (Ex1 - Ex7 and Ex10) were assessed to determine the effect of different combination of

acid and heat stabilizers on the level of free -OH groups content after processing conditions with elevated temperature and increased residence times, i.e., after molding at 350 °C with 6 minute and 15 minute (') residence times. Results for the examples are presented in Table 2 Ex1-Ex3, Ex5 and Ex7 are comparative examples. Ex. 4, Ex6 and Ex8-Ex10 are reference examples.

## Table 2 – Effect of different acid and heat stabilizers on free –OH group content

| | EX1 | EX2 | EX3 | EX4 | EX5 | EX6 | EX7 | EX8 | EX9 | EX 10 | EX 11 | EX 12 |
|---|---|---|---|---|---|---|---|---|---|---|---|---|
| PC1 | 17.45 | 17.45 | 17.45 | 17.45 | 17.45 | 17.45 | - | - | - | 17.45 | 17.45 | 17.45 |
| PC2 | 81.93 | 81.85 | 81.93 | 81.85 | 81.93 | 81.85 | - | - | - | 81.9 | 81.88 | 81.92 |
| PC3 | - | - | - | - | - | - | 17.45 | 17.45 | 17.45 | | | |
| PC4 | - | - | - | - | - | - | 81.85 | 81.85 | 81.85 | | | |
| Irg 1076 | 0.02 | 0.02 | 0.02 | 0.02 | 0.02 | 0.02 | 0.02 | 0.02 | 0.02 | 0.02 | 0.02 | 0.02 |
| PETS | 0.3 | 0.3 | 0.3 | 0.3 | 0.3 | 0.3 | 0.3 | 0.3 | 0.3 | 0.30 | 0.30 | 0.30 |
| UV5411 (UV Abs) | 0.3 | 0.3 | 0.3 | 0.3 | 0.3 | 0.3 | 0.3 | 0.3 | 0.3 | 0.27 | 0.27 | 0.27 |
| Irg 168 (Heat stab) | -- | 0.08 | -- | 0.08 | -- | 0.08 | 0.08 | 0.08 | 0.08 | 0.06 | 0.08 | 0.036 |
| Acid stab/type | -- | -- | 3 ppm $H_3PO_3$ | 3 ppm $H_3PO_3$ | 1 ppm BuTos | 1 ppm BuTos | -- | 3 ppm $H_3PO_3$ | 1 ppm BuTos | 2 ppm BuTos | -- | -- |
| Free –OH | | | | | | | | | | | | |
| Pellets | 40 | 40 | 40 | 40 | 40 | 40 | 40 | 101 | 40 | 37 | 42 | 47 |
| 300 °C / 6' | 60 | 60 | 60 | 60 | 60 | 60 | 60 | 105 | 57 | 49 | 61 | 66 |
| 350 °C / 6' | 272 | 124 | 246 | 485 | 436 | 70 | 88 | 450 | 79 | 98 | 172 | 355 |
| 350 °C /15' | 828 | 437 | 483 | 513 | 499 | 139 | 444 | 647 | 131 | 236 | 411 | 520 |
| Bound/ unbound UV agent (ratio) | 2.4 | 4.5 | 4.0 | 0.03 | 5.4 | 0.3 | 8.3 | 0.3 | 0.1 | 1.0 | 13.0 | 10.0 |

As shown in Table 2, the addition of a heat stabilizer reduced the formation of free -OH groups (compare Ex1 to Ex2) after varying processing conditions. However, the combination of the heat stabilizer with the acid stabilizer butyl tosylate surprisingly provided the lowest amount of free -OH group formation. See Ex6 (including butyl tosylate and Irganox 1068). The level of free -OH groups however did not appear to depend upon the level of UV absorbing component loss. With the addition of phosphoric acid $H_3PO_3$, the loss of UV protection was successfully prevented, but a higher level of -OH group content was observed. Ex10 included increased butyl tosylate and decreased heat stabilizer (Irg 168) and exhibited a lower free -OH level, but not as low as Ex6 and Ex9. Higher quality PC formulations were also evaluated for the effect of acid stabilizer and heat stabilizer after abusive molding conditions. Examples 7-9 (Ex7-Ex9) included PC3 and PC4 (greater than 99.7% purity) in combination with BuTos (acid stabilizer, butyl tosylate) as well as in combination with heat stabilizer (Irg 168). Results are also presented in Table 2.

As observed in the data series collected across Ex1-Ex6, the combination of butyl tosylate and heat stabilizer (Irg 168) provided an overall lower free -OH group for Ex7-Ex9. However after abusive molding conditions (injection molding at 350 °C, 15 minutes residence time), the polycarbonates exhibited significantly higher levels of free -OH groups. Ex9 including both butyl tosylate and heat stabilizer (Irg 168) had the lowest free -OH group content and prevented UV reactivity with the polycarbonate. Similarly, Ex8 having $H_3PO_3$ UV absorbing component/stabilizer in combination with the heat stabilizer (Irg 168), prevented reaction of the UV stabilizer, but did not result in reduced -OH group content.

Formulations with different levels of heat stabilizer (Irg 168) typical for commercially available samples were also compared as Examples 11 and 12 (Ex11 and Ex12). Ex11 and Ex12 are comparative examples. Table 2 also presents the formulations of the commercially available color-stable polycarbonates and the resultant levels of free -OH after abusive molding conditions.

As shown in Table 2, certain samples exhibited a significant increase in free - OH group levels after injection molding at 350 °C with 15 minute residence times. See Ex11 and Ex12. Comparatively, Ex6, Ex9, and Ex10 including both the acid stabilizer (butyltosylate) and the heat stabilizer (Irg 168) had free -OH group levels less those of certain commercially available samples (less than 200 ppm for Ex6 and Ex9; less than 300 ppm for Ex10).

*DOE Analysis*

Examples 1-10 made apparent the correlation between the formulation content and the selected processing parameters through a design of experiments (DOE) analysis. The level of free -OH groups is dependent on the processing

conditions and the formulation. A design of experiments analysis was performed to enable predictions of -OH group content based upon the specific formulation and processing conditions. The UV5411 level was varied from 0 wt. % up to 0.30 wt. %, a typical level for UV stabilized polycarbonate. The temperature was varied from 320 °C to 360 °C. Table 3 presents the variables and ranges observed. Residence times were varied from 6' up to 15', where 6' is a standard, or slightly longer than standard residence time and 15' corresponds to a residence time typically used in 2K molding (abusive molding) processes.

**Table 3** - **Ranges studied for parameters affecting free -OH group content**

| Factor/Parameter | Minimum Value | Center | Maximum Value |
|---|---|---|---|
| UV5411 (wt. %) | 0 | 0.15 | 0.3 |
| BuTos (ppm) | 0 | 2 | 4 |
| T (°C) | 320 | 340 | 360 |
| t (min) | 6 | 10 | 15 |

At lower temperatures, the level of free-OH groups did not increase significantly as compared to the level already present in the pellets (see data for 300 °C/6' in table 2).

FIGS. 1 and 2 present the results of the DOE analysis. The right axes indicate the free -OH group content showing actual data points and the left axes indicate the modelled effect of the parameters on the level of free -OH group content. Under the mildest conditions (320 °C, no UV5411), the addition of butyl tosylate reduces the levels of free -OH group content by about 67 % (i.e., from about 150 ppm to about 50 ppm). At higher temperatures, the free -OH group content increases significantly with the residence time. This trend was observed for formulations with butyl tosylate, but the free -OH group content remained less than 200 ppm, even at a residence time of 15 minutes. In the presence of the UV absorbing component, UV 5411), without butyl tosylate, higher free -OH group content was found. The higher free -OH group content was attributed to the additional degradation resulting from polycarbonate chain scission caused by the benzotriazole UV absorbing component. At 320 °C, the free -OH group content increased to 300 ppm and 500 ppm in the presence of 0.15 wt. % and 0.30 wt. % UV absorbing component, respectively. The introduction of butyl tosylate to formulations containing UV5411 further lowers the free -OH group content to less than 200 ppm.

## Claims

**1.** A method for the manufacture of an article comprising injection molding a composition comprising:

a polycarbonate resin;
a heat stabilizer; and
an acid stabilizer,
an ultraviolet absorbing component
wherein the heat stabilizer comprises a phenolic compound a phosphor-based compound, or a combination thereof,
wherein the acid stabilizer comprises a sulfonic acid,
wherein the ultraviolet absorbing component is a benzatriazole compound,
wherein the polycarbonate is a polycarbonate homopolymer including repeating units derived from bisphenol A,
wherein the heat stabilizer is present in an amount between 0.01 wt. % and 0 .15 wt. % and wherein the acid stabilizer is present in an amount between 0.5 ppm and 20 ppm by weight based on the total weight of the composition,
wherein the injection molding is performed at at a maximum molding temperature of at least 350 °C and a residence time of at least 15 minutes, or a maximum molding temperature of at least 330 °C at a residence time of at least 15 minutes, or a maximum molding temperature of at least 340 °C at a residence time of at least 10 minutes, or a maximum molding temperature of at least 350 °C at a residence time of at least about 6 minutes, or a maximum molding temperature of at least 360 °C at a residence time of at least 3 minutes,
wherein the molded article when tested using a 2.5 mm injection molded color plaque, comprises a level of free -OH groups that is less than a level of free -OH groups of a reference article injection molded from a substantially similar reference composition consisting essentially of the polycarbonate resin and an ultraviolet absorbing component without the heat stabilizer and the acid stabilizer, wherein the level of free -OH groups is determined by derivatization and analysis using $^{31}P$ NMR.

2. The method of claim 1, wherein the article formed from the composition, when tested using a 2.5 mm injection molded color plaque, comprises less than 150 ppm by weight free -OH groups with a maximum molding temperature of at least 350 °C and at a residence time of at least 6 minutes, wherein the level of free -OH groups is determined by derivatization and analysis using $^{31}P$ NMR.

3. The method of claim 1, wherein the article formed from the composition, when tested using a 2.5 mm injection molded color plaque, comprises less than 100 ppm by weight free -OH groups with a maximum molding temperature of at least 350 °C and at a residence time of at least 6 minutes wherein the level of free -OH groups is determined by derivatization and analysis using $^{31}P$ NMR.

4. The method according to claim 1, wherein the molded article when tested using a 2.5 mm injection molded color plaque, comprises less than 400 ppm by weight free -OH groups and the ultraviolet absorbing component is present in an amount such that a ratio of unbound to bound ultraviolet absorbing component is less than 1 wherein the level of free -OH groups is determined by derivatization and analysis using $^{31}P$ NMR.

5. The method according to any one of claims 1-4, wherein the heat stabilizer comprises an organo-phosphorous acid ester.

6. The method according to any one of the claims 1-5, wherein the composition further comprises a release agent.

## Patentansprüche

1. Verfahren zur Fertigung eines Artikels, das Spritzgießen einer Zusammensetzung umfasst, welche umfasst:

   ein Polycarbonatharz;
   einen Wärmestabilisator; und
   einen Säurestabilisator,
   eine Ultraviolettabsorptionskomponente,
   wobei der Wärmestabilisator eine phenolische Verbindung, eine Verbindung auf Phosphorbasis oder eine Kombination davon umfasst,
   wobei der Säurestabilisator eine Sulfonsäure umfasst,
   wobei die Ultraviolettabsorptionsverbindung eine Benzatriazolverbindung ist,
   wobei das Polycarbonat ein Polycarbonathomopolymer ist, das sich wiederholende Einheiten einschließt, die von Bisphenol A abgeleitet sind,
   wobei der Wärmestabilisator in einer Menge zwischen 0,01 Gew.% und 0,15 Gew.% vorhanden ist, und wobei der Säurestabilisator in einer Menge zwischen 0,5 Gew.ppm und 20 Gew.ppm vorhanden ist, bezogen auf das Gesamtgewicht der Zusammensetzung,
   wobei das Spritzgießen bei einer maximalen Formungstemperatur von mindestens 350 °C und einer Verweilzeit von mindestens 15 Minuten oder einer maximalen Formungstemperatur von mindestens 330 °C bei einer Verweilzeit von mindestens 15 Minuten oder einer maximalen Formungstemperatur von mindestens 340 °C bei einer Verweilzeit von mindestens 10 Minuten oder einer maximalen Formungstemperatur von mindestens 350 °C bei einer Verweilzeit von mindestens etwa 6 Minuten oder einer maximalen Formungstemperatur von mindestens 360 °C bei einer Verweilzeit von mindestens 3 Minuten durchgeführt wird,
   wobei der Formartikel, wenn er unter Verwendung einer 2,5 mm spritzgegossenen Farbplatte getestet wird, ein Niveau an freien Gruppen -OH umfasst, das unter einem Niveau an freien Gruppen -OH eines Referenzartikels liegt, der aus einer im Wesentlichen ähnlichen Referenzzusammensetzung spritzgegossen worden ist, die im Wesentlichen aus dem Polycarbonatharz und einer Ultraviolettabsorptionskomponente ohne den Wärmestabilisator und den Säurestabilisator besteht, wobei das Niveau der freien Gruppen -OH durch Derivatisierung und Analyse unter Verwendung von $^{31}P$-NMR bestimmt wird.

2. Verfahren nach Anspruch 1, wobei der aus der Zusammensetzung gebildete Artikel, wenn er unter Verwendung einer 2,5 mm spritzgegossenen Farbtafel getestet wird, weniger als 150 Gew.ppm freie Gruppen -OH mit einer maximalen Formungstemperatur von mindestens 350 °C und einer Verweilzeit von mindestens 6 Minuten umfasst, wobei das Niveau der freien Gruppen -OH durch Derivatisierung und Analyse unter Verwendung von $^{31}P$-NMR bestimmt wird.

3. Verfahren nach Anspruch 1, wobei der aus der Zusammensetzung gebildete Artikel, wenn er unter Verwendung

einer 2,5 mm spritzgegossenen Farbtafel getestet wird, weniger als 100 Gew.ppm freie Gruppen -OH mit einer maximalen Formungstemperatur von mindestens 350 °C und einer Verweilzeit von mindestens 6 Minuten umfasst, wobei das Niveau der freien Gruppen -OH durch Derivatisierung und Analyse unter Verwendung von $^{31}P$-NMR bestimmt wird.

4. Verfahren nach Anspruch 1, wobei der Formartikel, wenn unter Verwendung einer 2,5 mm spritzgegossenen Farbtafel getestet wird, weniger als 400 Gew.ppm freie Gruppen -OH umfasst, und die Ultraviolettabsorptionskomponente in einer solchen Menge vorhanden ist, dass ein Verhältnis von ungebundener zu gebundener Ultraviolettabsorptionskomponente kleiner als 1 ist, wobei das Niveau der freien Gruppen - OH durch Derivatisierung und Analyse unter Verwendung von $^{31}P$-NMR bestimmt wird.

5. Verfahren nach einem der Ansprüche 1 bis 4, wobei der Wärmestabilisator einen Organophosphorigsäureester umfasst.

6. Verfahren nach einem der Ansprüche 1 bis 5, wobei die Zusammensetzung des Weiteren ein Trennmittel umfasst.

## Revendications

1. Procédé pour la fabrication d'un article comprenant le moulage par injection d'une composition comprenant :

   une résine de polycarbonate ;
   un stabilisant thermique ; et
   un stabilisant acide ;
   un composant absorbant les ultraviolets,
   dans lequel le stabilisant thermique comprend un composé phénolique, un composé à base de phosphore, ou une combinaison de ceux-ci,
   dans lequel le stabilisant acide comprend un acide sulfonique,
   dans lequel le composant absorbant les ultraviolets est un composé de benzotriazole,
   dans lequel le polycarbonate est un homopolymère de polycarbonate comportant des motifs répétitifs dérivés du bisphénol A,
   dans lequel le stabilisant thermique est présent dans une quantité comprise entre 0,01 % en poids et 0,15 % en poids et dans lequel le stabilisant acide est présent dans une quantité comprise entre 0,5 ppm et 20 ppm en poids, rapporté au poids total de la composition,
   dans lequel le moulage par injection est effectué à une température de moulage maximale d'au moins 350 °C et un temps de résidence d'au moins 15 minutes, ou une température de moulage maximale d'au moins 330 °C à un temps de résidence d'au moins 15 minutes, ou une température de moulage maximale d'au moins 340 °C à un temps de résidence d'au moins 10 minutes, ou une température de moulage maximale d'au moins 350 °C à un temps de résidence d'au moins 6 minutes environ, ou une température de moulage maximale d'au moins 360 °C à un temps de résidence d'au moins 3 minutes,
   dans lequel l'article moulé, lorsqu'il est testé au moyen d'une plaque colorée moulée par injection de 2,5 mm, comprend un niveau de groupes -OH libres qui est inférieur à un niveau de groupes -OH libres d'un article de référence moulé par injection à partir d'une composition de référence sensiblement similaire consistant essentiellement en la résine de polycarbonate et un composant absorbant les ultraviolets sans le stabilisant thermique ni le stabilisant acide, dans lequel le niveau de groupes -OH libres est déterminé par dérivation et analyse par RMN $^{31}P$.

2. Procédé de la revendication 1, dans lequel l'article formé à partir de la composition, lorsqu'il est testé au moyen d'une plaque colorée moulée par injection de 2,5 mm, comprend moins de 150 ppm en poids de groupes -OH libres avec une température de moulage maximale d'au moins 350 °C et à un temps de résidence d'au moins 6 minutes, dans lequel le niveau de groupes -OH libres est déterminé par dérivation et analyse par RMN $^{31}P$.

3. Procédé de la revendication 1, dans lequel l'article formé à partir de la composition, lorsqu'il est testé au moyen d'une plaque colorée moulée par injection de 2,5 mm, comprend moins de 100 ppm en poids de groupes -OH libres avec une température de moulage maximale d'au moins 350 °C et à un temps de résidence d'au moins 6 minutes, dans lequel le niveau de groupes -OH libres est déterminé par dérivation et analyse par RMN $^{31}P$.

4. Procédé de la revendication 1, dans lequel l'article moulé, lorsqu'il est testé au moyen d'une plaque colorée moulée

par injection de 2,5 mm, comprend moins de 400 ppm en poids de groupes -OH libres et le composant absorbant les ultraviolets est présent dans une quantité telle qu'un rapport entre composant absorbant les ultraviolets non lié et lié est inférieur à 1, dans lequel le niveau de groupes -OH libres est déterminé par dérivation et analyse par RMN $^{31}P$.

**5.** Procédé selon l'une quelconque des revendications 1 à 4, dans lequel le stabilisant thermique comprend un ester d'acide organophosphoré.

**6.** Procédé selon l'une quelconque des revendications 1 à 5, dans lequel la composition comprend en outre un agent de démoulage.

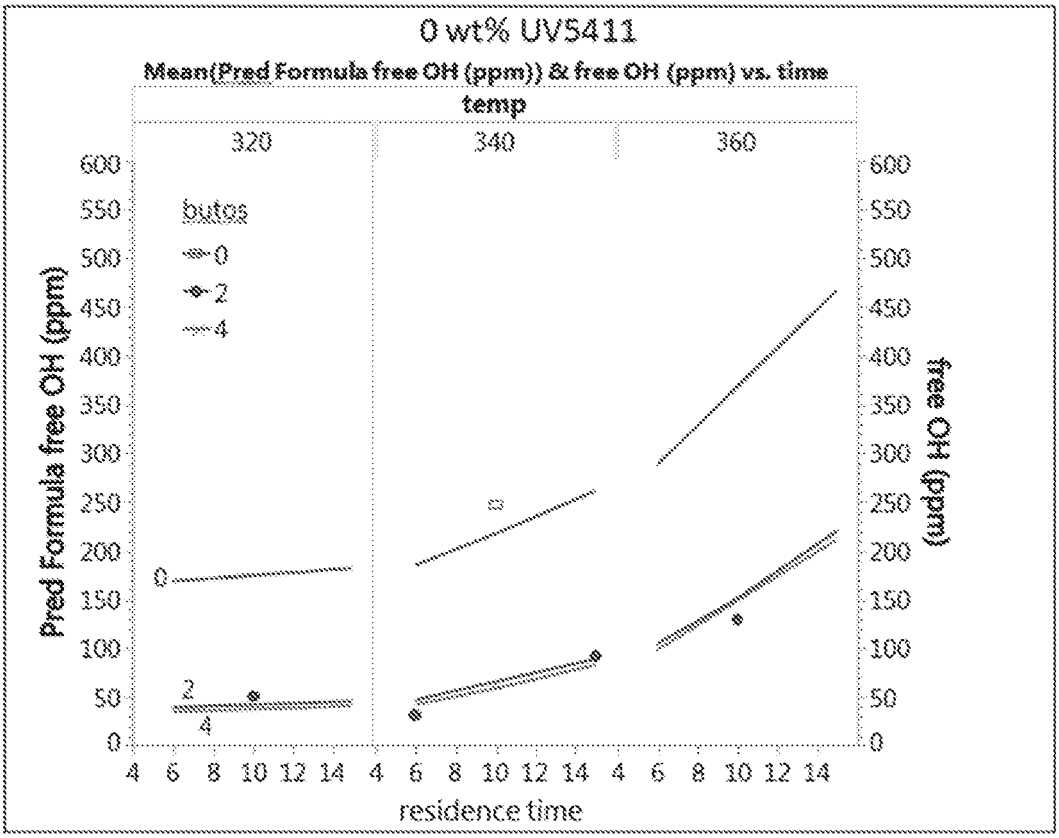
0 wt% UV5411
Mean(Pred Formula free OH (ppm)) & free OH (ppm) vs. time
temp
320
340
360
600
550
500
450
400
350
300
250
200
150
100
50
0
Pred Formula free OH (ppm)
free OH (ppm)
butos
0
2
4
4 6 8 10 12 14 4 6 8 10 12 14 4 6 8 10 12 14
residence time

FIG. 1

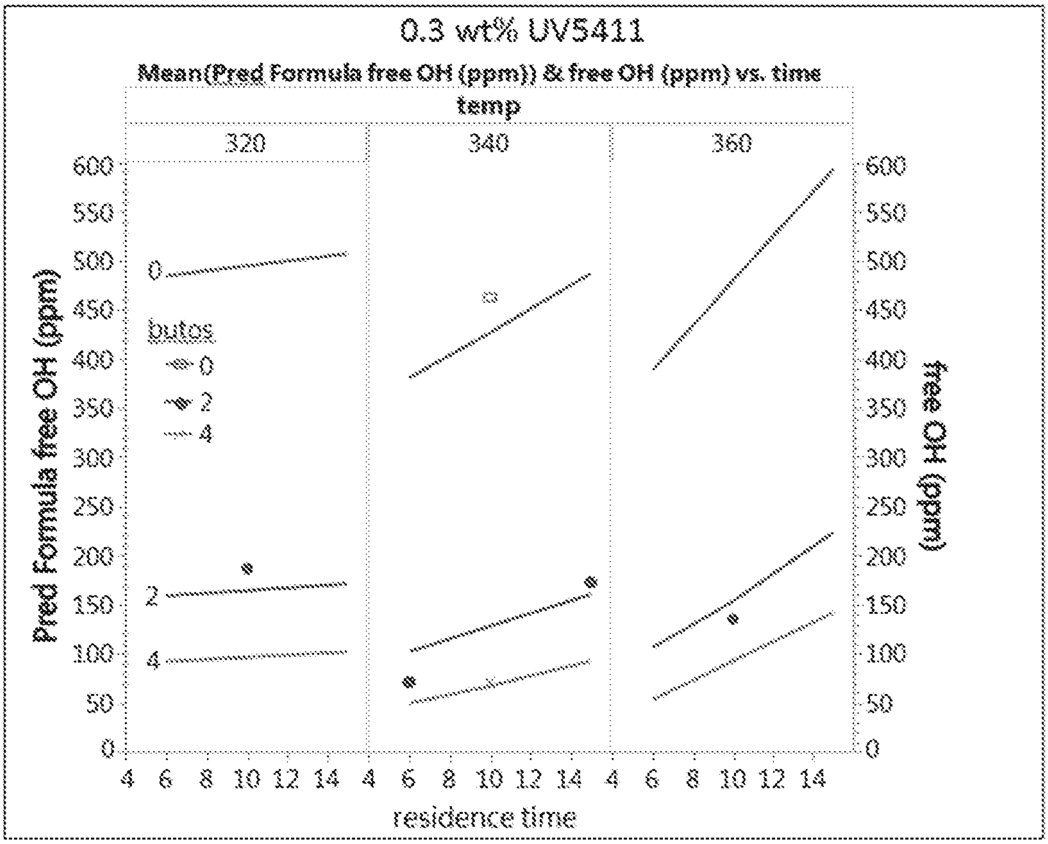
0.3 wt% UV5411
Mean(Pred Formula free OH (ppm)) & free OH (ppm) vs. time
temp
320
340
360
Pred Formula free OH (ppm)
free OH (ppm)
butos
0
2
4
600
550
500
450
400
350
300
250
200
150
100
50
0
4 6 8 10 12 14
residence time

FIG. 2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2017103764 A
- US 2009088505 A
- WO 2017203493 A
- EP 3380563 A
- US 5276109 A